Europäisches Patentamt

European Patent Office

Office européen des brevets

(11) Veröffentlichungsnummer: **0 320 667**
**A2**

# (12) EUROPÄISCHE PATENTANMELDUNG

(21) Anmeldenummer: 88119461.7

(22) Anmeldetag: 23.11.88

(51) Int. Cl.4: **B29C 59/02**

(30) Priorität: 08.12.87 DE 3741586

(43) Veröffentlichungstag der Anmeldung:
21.06.89 Patentblatt 89/25

(84) Benannte Vertragsstaaten:
AT BE CH DE ES FR GB GR IT LI NL SE

(71) Anmelder: **Louda, Günther**
**Dr.-Kurt-Huber-Strasse 10**
**D-8022 Grünwald(DE)**

(72) Erfinder: **Louda, Günther**
**Dr.-Kurt-Huber-Strasse 10**
**D-8022 Grünwald(DE)**

(74) Vertreter: **Lamprecht, Helmut, Dipl.-Ing.**
**Corneliusstrasse 42**
**D-8000 München 5(DE)**

(54) Prägestanze zur Erzeugung von Sollbruchprägungen auf blatt- oder kartenförmigem Material.

(57) Eine Prägestanze (10) zur Erzeugung von Sollbruchprägungen auf blatt- oder kartenförmigem Material mit ungleichförmiger Dicke, insbesondere auf mit Wasserzeichen versehenen, zur Umhüllung durch Folien bestimmten Inletts von Ausweisen, besitzt zwei relativ zueinander gegenläufig an Linearführungen (16, 18, 20, 22) hin- und herbeweglich gelagerte, durch eine Antriebseinrichtung (28, 30; 36, 42) schließbare Prägewerkzeuge (24, 26), wobei sich der Antrieb (30) auf einem Prägewerkzeug (24) mittig zwischen den Linearführungen (16, 18, 20, 22) kugelgelenkig abstützt, so daß sich dieses Prägewerkzeug (24) unter Ausschöpfung des Führungsspiels zum Ausgleich der ungleichförmigen Materialdicken des Prägeguts kugelgelenkig einstellen kann.

## Prägestanze zur Erzeugung von Sollbruchprägungen auf blatt- oder kartenförmigem Material.

Die Erfindung betrifft eine Prägestanze zur Erzeugung von Sollbruchstellen auf blatt- oder kartenförmigem Material mit ungleichförmiger Dicke, insbesondere auf mit Wasserzeichen versehenen, zur Umhüllung durch Folien bestimmten Inletts von Ausweisen, mit zwei relativ zueinander gegenläufig an Linearführungen hin- und herbeweglich gelagerten, durch eine Antriebseinrichtung schließbaren Prägewerkzeugen.

Die Erfindung wird am Beispiel einer Ausweiskarte erläutert, welche aus einem kartenförmigen Datenträger besteht, der zwischen zwei durchsichtigen Deckfolien eingeschlossen ist. Um die Fälschungssicherheit derartiger Ausweise zu verbessern, ist der Datenträger mit einem Wasserzeichen versehen. Außerdem sind in den Datenträger Sollbruchlinien eingeprägt, welche bei dem Versuch, die Deckfolien von dem Datenträger abzuziehen, zu einem Bruch des Datenträgers führen sollen.

Damit dieser erwünschte Bruch des Datenträgers zuverlässig eintritt, müssen die Sollbruchlinien einerseits tief genug eingeprägt sein, andererseits dürfen sie aber auch den Datenträger nicht vorzeitig durchtrennen. Es hat sich nun gezeigt, daß bereits so geringe Schwankungen der Materialdicke, wie sie durch Wasserzeichen verursacht werden, die zuverlässige Funktion der Sollbruchlinien beeinträchtigen, weil diese Schwankungen der Materialdicke während des Prägevorgangs Rückwirkungen auf die Präzission der erzeugten Sollbruchlinien haben.

Aufgabe der Erfindung ist es deshalb, diese Schwierigkeit zu überwinden und eine Prägestanze der eingangs genannten Art so auszugestalten, daß sie die für eine sichere Funktion erforderliche Genauigkeit der Sollbruchprägungen auch dann gewährleistet, wenn die Materialstärke des zu prägenden Materials, z.B. durch ein Wasserzeichen eine gewisse Schwankung aufweist.

Zur Lösung dieser Aufgabe ist die Prägestanze derart ausgebildet, daß sich der Antrieb auf einem Prägewerkzeug mittig zwischen den Linearführungen kugelgelenkig abstützt und daß dieses Prägewerkzeug gegenüber den Linearführungen eine begrenzte, eine kugelgelenkige Bewegung um den Angriffspunkt gestattende Beweglichkeit aufweist.

Es hat sich gezeigt, daß sich durch diese Konstruktion das kugelgelenkig angeordnete Prägewerkzeug unter dem hohen Prägedruck und unter Ausschöpfung des geringen Führungsspiels selbsttätig so einstellt, daß eine möglichst gleichmäßige Prägung erreicht wird.

Eine zweckmäßige Ausgestaltung besteht darin, daß die Linearführungen aus vier in den Eckpunkten eines Rechtecks angeordneten Führungssäulen bestehen.

Damit ist einerseits eine hohe Präzission in der gegenseitigen Ausrichtung der beiden Prägewerkzeuge gegeben, während andererseits die Möglichkeit zu der nur geringen erforderlichen Verstellung des kugelgelenkig beweglichen Prägewerkzeugs unter Ausnützung des Führungsspiels begünstigt wird.

Noch eine weitere vorteilhafte Ausgestaltung besteht darin, daß der Antrieb des kugelgelenkig beweglichen Prägewerkzeugs aus einem Druckstempel besteht, der mit einer Kugelfläche an diesem Prägewerkzeug in Prägerichtung anliegt.

Damit wird eine punktförmige Anlage des Antriebs an dem kugelgelenkig beweglichen Prägewerkzeug erreicht, wodurch eine ungehinderte, optimale Einstellung beim Prägevorgang ermöglicht wird.

Um einen sehr hohen Gegendruck zu erreichen, ist nach einer weiteren zweckmäßigen Ausführungsform dem anderen Prägewerkzeug als Antrieb eine durch einen Betätigungszylinder betätigbare Kniehebelanordnung zugeordnet.

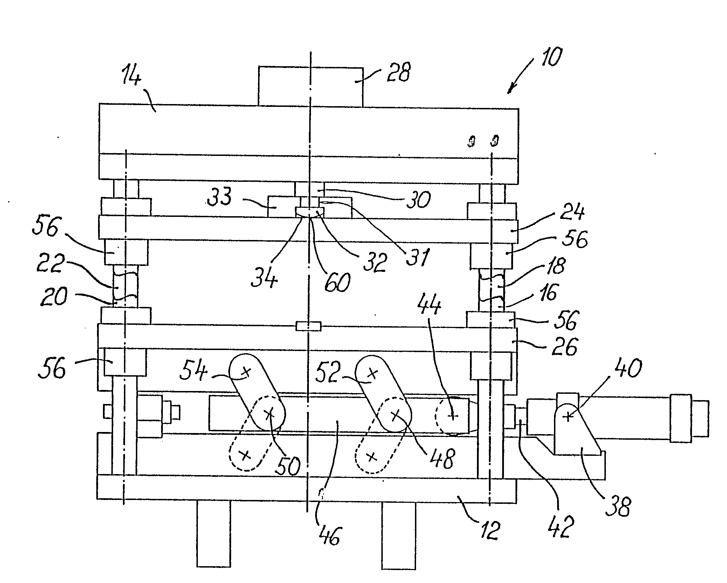

Anhand der nun folgenden Beschreibung eines in der Zeichnung dargestellten Ausführungsbeispiels der Erfindung wird diese näher erläutert.

-Die Figur zeigt eine schematische Seitenansicht einer erfindungsgemäß ausgebildeten Prägestanze.

Eine insgesamt mit 10 bezeichnete Prägestanze weist eine etwa rechteckige Sockelplatte 12 und eine ebensolche Kopfplatte 14 auf, an deren Eckbereichen jeweils zylindrische Führungssäulen 16, 18, 20 und 22 angeordnet sind, die zueinander parallel zwischen der Sockelplatte 12 und der Kopfplatte 14 verlaufen und eine Linearführung für zwei auf diesen Führungssäulen relativ zueinander beweglich gelagerte Prägewerkzeuge bilden. Diese Prägewerkzeuge bestehen beim dargestellten Beispiel aus einem oberen Werkzeugträger 24 und einem unteren Werkzeugträger 26, die ihrerseits dazu vorbereitet sind, nicht näher gezeigte Messerplatten auswechselbar aufzunehmen.

Den beiden Werkzeugträgern 24 und 26 sind getrennte Antriebe zugeordnet. Der obere Werkzeugträger 24 wird durch einen oberen Betätigungszylinder 28 in seine wirksame Prägestellung gedrückt, der in der Mitte der Kopfplatte 14 vertikal ausgerichtet befestigt ist. Ein durch diesen Betätigungszylinder 28 nach unten bewegbarer Druckstempel 30 liegt mit einer Druckplatte 32 an der Oberseite des Werkzeugträgers 24 an, wobei die Druckplatte 32 dem Werkzeugträger 24 eine Kugelfläche 34 zuwendet, so daß eine kugelgelenkige Beweglichkeit des Werkzeugträgers 24 gegenüber dem Druckstempel 30 unter Ausschöpfung des Führungsspiels des Werkzeugträgers 24 auf den Führungssäulen 16, 18, 20 und 22 ermöglicht wird.

Der Werkzeugträger 24 ist an seiner Oberseite mit einer in eine Einschnürung 31 des Druckstempels 30 eingreifenden Aufnahme 33 für die Druckplatte 32 versehen, so daß bei der Aufwärtsbewegung des Druckstempels 30 der Werkzeugträger 24 mit nach oben gezogen wird.

Dem unteren Werkzeugträger 26 ist ein horizontal angeordneter, in einem auf der Sockelplatte 12 befestigten Lagerbock 38 um eine horizontale, quer zu seiner Stellrichtung verlaufende Achse 40 verschwenkbar gelagerter, unterer Betätigungszylinder 36 zuge ordnet, dessen Kolbenstange 42 über ein Gelenk 44 mit zur Achse 40 paralleler Achse an einem Lenker 46 angreift, der mit den Kniegelenken 48 und 50 zweier Kniehebel 52 bzw. 54 gelenkig verbunden ist, die einerseits gelenkig an der Sockelplatte 12 und andererseits gelenkig an dem unteren Werkzeugträger 26 angeschlossen sind. Die Anordnung ist so getroffen, daß die Kniegelenke 48 und 50 nahezu ihre gestreckte Stellung erreicht haben, wenn der Prägevorgang stattfindet, wodurch eine sehr hohe Prägekraft erreicht wird.

Die Werkzeugträger 24 und 26 sind über Führungshülsen 56 auf den Führungssäulen 16, 18, 20 und 22 gelagert. Das fertigungsbedingte Spiel derartiger Führungshülsen, die beispielsweise als Kugelumlaufbüchsen ausgebildet sein können, reicht aus, die kugelgelenkige Einstellung des oberen Werkzeugträgers 24 in dem erforderlichen Ausmaß zu ermöglichen. In Verbindung mit der zentralen Einwirkung der vom oberen Betätigungszylinder 28 ausgeübten Druckkraft auf den oberen Werkzeugträger 24 kann sich dieser obere Werkzeugträger 24 in dem zum Ausgleich der ungleichförmigen Materialstärken der zu prägenden Karte erforderlichen Maß um den Angriffspunkt 60 der Druckplatte 32 am oberen Werkzeugträger 24 kugelgelenkartig bewegen.

## Ansprüche

1. Prägestanze zur Erzeugung von Sollbruchprägungen auf blatt- oder kartenförmigem Material mit ungleichförmiger Dicke, insbesondere auf mit Wasserzeichen versehenen, zur Umhüllung durch Folien bestimmten Inletts von Ausweisen, mit zwei relativ zueinander gegenläufig an Linearführungen hin- und herbeweglich gelagerten, durch eine Antriebseinrichtung schließbaren Prägewerkzeugen, *dadurch gekennzeichnet*, daß sich der Antrieb (30) auf einem Prägewerkzeug (24) mittig zwischen den Linearführungen (16, 18, 20, 22) kugelgelenkig abstützt und daß dieses Prägewerkzeug (24) gegenüber den Linearführungen eine begrenzte, eine kugelgelenkige Bewegung um den Angriffspunkt (35) gestattende Beweglichkeit aufweist.

2. Prägestanze nach Anspruch 1, *dadurch gekennzeichnet*. daß die Linearführungen aus vier in den Eckpunkten eines Rechtecks angeordneten Führungssäulen (16, 18, 20, 22) bestehen.

3. Prägestanze nach einem der vorhergehenden Ansprüche, *dadurch gekennzeichnet*, daß der Antrieb des kugelgelenkig beweglichen Prägewerkzeugs (24) aus einem Druckstempel (30) besteht, der mit einer Kugelfläche (34) an diesem Prägewerkzeug (24) in Prägerichtung anliegt.

4. Prägestanze nach einem der vorhergehenden Ansprüche, *dadurch gekennzeichnet*, daß dem anderen Prägewerkzeug (26) als Antrieb eine durch einen Betätigungszylinder (36) betätigbare Kniehebelanordnung zugeordnet ist.